# EUROPÄISCHE PATENTSCHRIFT

(11) **EP 1 494 025 B1**
(45) Veröffentlichungstag und Bekanntmachung des Hinweises auf die Patenterteilung: **01.08.2007**
(21) Anmeldenummer: 04405341.1
(22) Anmeldetag: 03.06.2004
(51) Int. Cl.: G01N 27/417, G01N 27/419

(54) **Test der Funktionstauglichkeit einer Lambdasonde**
Test for proper operation of a lambda probe
Surveillance du bon fonctionnement d'une sonde lambda

(30) Priorität: 03.07.2003 EP 03405495
(43) Veröffentlichungstag der Anmeldung: 05.01.2005
(73) Patentinhaber: Sulzer Hexis AG, 8400 Winterthur (CH)
(72) Erfinder: Holoch, Philip, 8405 Winterthur (CH); Gamper, Thomas, 8253 Diessenhofen (CH)
(74) Vertreter: Sulzer Management AG

(56) Entgegenhaltungen:
- US-A- 5 558 752
- US-A- 6 059 947
- US-B1- 6 471 840

## Beschreibung

Die Erfindung betrifft eine Messeinrichtung zum Überwachen von Restsauerstoff in einem Abgas gemäss Oberbegriff von Anspruch 1, ein Verfahren zum Betreiben der Messeinrichtung sowie eine Anwendung des Verfahrens.

Die Messeinrichtung ist eine modifizierte Lambdasonde (Breitband-Lambdasonde), wie sie in Automobilen zum Überwachen der Abgase verwendet wird. Eine derartige Lamdasonde ist in US-A- 5 558 752 beschrieben.

Die Messeinrichtung umfasst einen Sensor und in dessen Innenbereich eine "Reaktionskammer", in der sich der Partialdruck von molekularem Sauerstoff durch Elektrodenreaktionen beeinflussen lässt. Dieser Sauerstoffpartialdruck ist mittels einer zwischen der Reaktionskammer und einem Abgasraum elektrochemisch arbeitenden Sauerstoffionenpumpe veränderbar oder einstellbar. Gleichzeitig mit einem Transport von Sauerstoffionen in der lonenpumpe erfolgt ein Transport von molekularem Sauerstoff durch einen "Diffusionsspalt" in die Reaktionskammer hinein oder aus dieser heraus. Der Diffusionsspalt verbindet die Reaktionskammer mit der Messstelle im Aussenbereich der Sonde, an welcher die Konzentration des Restsauerstoffs im Abgas (oder dessen Partialdruck) bestimmt wird. Der Sauerstoffpartialdruck in der Reaktionskammer wird als Sollwert eines Regelkreises vorgegeben. Der Istwert dieses Regelkreises wird dabei elektrochemisch mittels einer Nernstzelle bezüglich einem Referenzwert bestimmt, der durch den Sauerstoffpartialdruck der Umgebungsluft gegeben ist. Stellgrösse des Regelkreises ist ein elektrischer "Pumpstrom", mit dem ein Sauerstoffabfluss oder -zufluss in der Sauerstoffionenpumpe bewirkt wird. Es stellt sich ein stationärer Zustand ein, in dem der Diffusionsstrom des molekularen Sauerstoffs durch den Diffusionsspalt und der Sauerstoffionenstrom in der lonenpumpe gleich gross sind. Der Unterschied zwischen dem Sauerstoffpartialdruck im Abgas und jenem der Reaktionskammer hat einen Pumpstrom zur Folge, der sowohl positiv als auch negativ sein kann.

Die Nernstzelle und die Sauerstoffionenpumpe umfassen jeweils eine sauerstoffionenleitende Festelektrolytschicht und auf dieser Schicht aufgebrachte Elektrodenschichten, mittels derer sich Redoxprozesse mit molekularem Sauerstoff, mit Sauerstoffionen der Festelektrolytschicht und mit Elektronen ergeben. Die Festelektrolyte sind nur bei einer hohen Temperatur für die Sauerstoffionen leitend.

In der Sauerstoffionenpumpe werden die Elektronen über einen elektrischen Schaltkreis an den Elektroden zu- bzw. weggeführt; sie bilden dabei den Pumpstrom. Die Stärke des Pumpstroms lässt sich im stationären Zustand als Mass für die zu messende Konzentration des Restsauerstoffs im Abgas nutzen. Die mit der Nernstzelle bestimmte Spannung wird in einer elektronischen Messeinrichtung mit einer Referenzspannung verglichen, die dem Sollwert des Partialdrucks in der Reaktionskammer entspricht. Zum Angleichen des Istwerts an den Sollwert wird die Stärke des Pumpstroms geregelt.

Bei der Verwendung eines Brennstoffs, insbesondere eines gasförmigen oder vergasten Brennstoffs für Raumheizungszwecke besteht ein energieschonendes Vorgehen darin, neben der Erzeugung von thermischer Energie auch elektrische Energie mittels Brennstoffzellen zu erzeugen. Bei dieser oder anderen elektrochemischen Umsetzungen wie auch bei einer Verbrennung des Brennstoffs sind Vorsichtsmassnahmen vorgeschrieben. Eine solche Massnahme kann die Verwendung einer Messeinrichtung zum Überwachen des Restsauerstoffs in den bei der Energieerzeugung entstehenden Abgasen sein, um eine unterstöchiometrische Verbrennung und eine Bildung explosiver oder toxischer Gase zu vermeiden. Ein Beispiel einer Anlage mit einer Lambdasonde ist in der EP-A- 0 818 840 (dort Fig. 7) beschrieben. Bei der Überwachung des Restsauerstoffs ist eine zuverlässige, "eigensichere" Funktionstüchtigkeit der für das Messen verwendeten Sonde von grosser Wichtigkeit. Man muss zu jedem Zeitpunkt während dem Betrieb der Brennstoffzellenanlage wissen, ob die Messeinrichtung die Überwachung korrekt ausführt.

Bei der Verwendung einer Lambdasonde können an dieser diverse Defekte auftreten: Risse beispielsweise in den Festelektrolytschichten der lonenpumpe und der Nernstzelle; Verstopfungen des Diffusionsspalts durch Russ; Kontaktbrüche; Ansteigen des Heizwiderstands und Drift des Innenwiderstands der Nernstzelle infolge Alterung.

Aufgabe der Erfindung ist es, eine Messeinrichtung zum Überwachen des Restsauerstoffs in einem Abgas zu schaffen, deren Zustand durch ein ergänzendes Verfahren überwacht wird, um bei Auftreten von Defekten in der Messeinrichtung ein rechtzeitiges Eingreifen mit Abhilfemassnahmen zu ermöglichen. Diese Aufgabe wird durch die im Anspruch 1 definierte Messeinrichtung gelöst.

Mit der Messeinrichtung zum Überwachen von Restsauerstoff in einem Abgas wird eine Lambdasonde verwendet, bei der eine Messstelle für Sauerstoff an einem Sensor über einen Diffusionsspalt mit einer Reaktionskammer verbunden ist. Die Reaktionskammer treibt im Betrieb der Sonde mittels einem steuerbar einstellbaren Sauerstoffpartialdruck pᵢ einen Sauerstoffstrom l_{O2} längs dem Diffusionsspalt an. Es wird mittels einer elektrochemischen, durch einen elektrischen Pumpstrom lₚ angetriebenen Sauerstoffionenpumpe ein als Sollwert vorgegebener Sauerstoffpartialdruck pᵢ in der Reaktionskammer eingestellt. Dabei ist der Pumpstrom, dessen Stärke proportional zur Stärke des längs dem Diffusionsspalt angetriebenen Sauerstoffstroms ist, als Messgrösse für den Partialdruck pₘ des Restsauerstoffs im Abgas oder dessen Konzentration verwendbar. Während einer normalen Betriebsphase, der Phase N, ist der Restsauerstoff überwachbar. Zu Testzwecken ist die Lambdasonde zeitweise, intermittierend in einer Phase H und einer Phase L betreibbar. In diesen Betriebsphasen H und L nimmt der Sauerstoffpartialdruck pᵢ in der Reaktionskammer einen weitgehend minimalen Wert bzw. einen weitgehend maximalen Wert an. Mittels Wechseln zwischen den genannten Betriebsphasen, durch Registrieren des Pumpstroms Iₚ und durch Vergleichen der registrierten Pumpströme Iₚ mit Erfahrungswerten sind Rückschlüsse auf die Funktionstauglichkeit der Sonde ableitbar, so dass gegebenenfalls bei einer mangelhaften oder fehlenden Funktionstauglichkeit Massnahmen zur Behebung des Mangels oder zu einem Auswechseln des Sensors oder einer elektroschemischen Umsetzung einleitbar sind.

Der abhängige Anspruch 2 betrifft eine vorteilhafte Ausführungsform der erfindungsgemässen Messeinrichtung. Verfahren zum Betreiben dieser Messeinrichtung sind jeweils Gegenstand der Ansprüche 3 bis 7. Anspruch 8 bezieht sich auf Anwendungen des erfindungsgemässen Verfahrens.

Nachfolgend wird die Erfindung anhand der Zeichnungen erläutert. Es zeigen:
- Fig. 1: einen Schnitt durch einen Teil einer Lambdasonde,
- Fig. 2: eine graphische Darstellung des Pumpstroms bei einem dynamischen Betreiben der erfindungsgemässen Messeinrichtung für ein mageres Abgas (λ >> 1) und
- Fig. 3, 4: entsprechende Darstellungen für fette Abgase, deren λ rund 1 beträgt (λ = 1.01 und λ = 0.95).

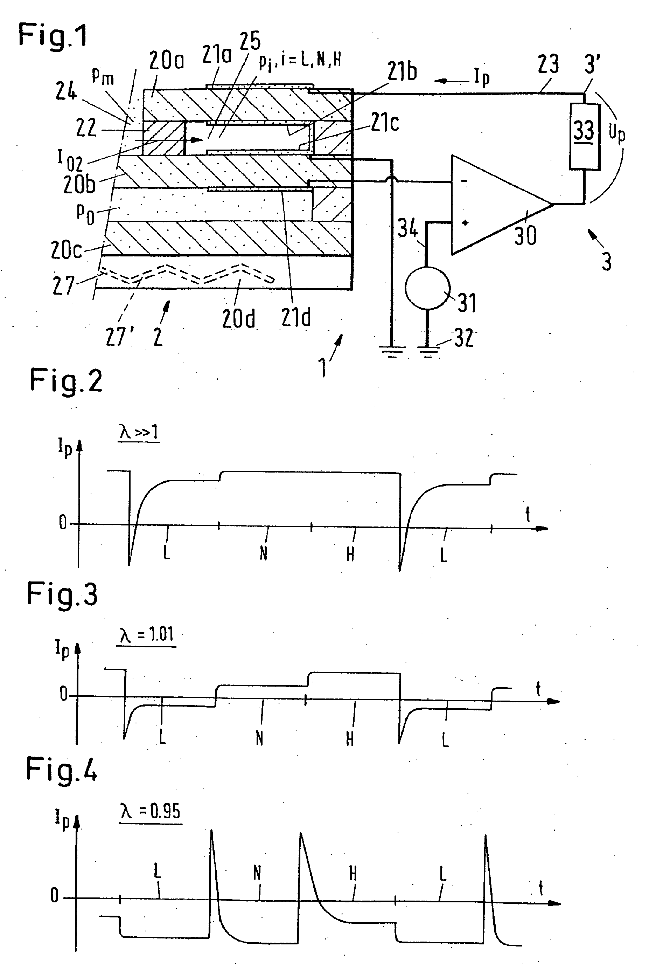

Eine Lambdasonde 1, wie sie in Fig. 1 schematisch dargestellt ist, umfasst einen Sensor 2 und einen elektronischen Teil 3. Diese beiden Komponenten 2 und 3 bilden einen Teil der erfindungsgemässen Messeinrichtung, mit der Restsauerstoff in einem Abgas überwacht werden kann. Im Innenbereich des Sensors 2 befindet sich eine Reaktionskammer 25, in welcher sich der Partialdruck pᵢ von molekularem Sauerstoff durch elektrochemische Reaktionen, die auf einer Elektrode 21b stattfinden, beeinflussen lässt. Dieser Sauerstoffpartialdruck pᵢ kann mittels einer zwischen der Reaktionskammer 25 und dem Abgas elektrochemisch arbeitenden Sauerstoffionenpumpe verändert werden. Gleichzeitig mit dem Ionentransport erfolgt ein Transport von molekularem Sauerstoff durch einen Diffusionsspalt 22 in die Reaktionskammer 25 hinein oder aus dieser heraus. Der Diffusionsspalt 22, der aus einem porösen, feine und kommunizierende Poren enthaltenden Material bestehen kann, verbindet die Reaktionskammer 25 mit einer Messstelle 24, an welcher der Partialdruck pₘ des Restsauerstoffs im Abgas bestimmt wird. Der Strom des durch den Diffusionsspalt 22 diffundierenden Sauerstoffs ist mit l_{O2} bezeichnet.

Der Sauerstoffpartialdruck pₘ wird elektrochemisch mittels einer Nernstzelle bezüglich einem Referenzwert bestimmt, der durch den in der Umgebung bestehenden Partialdruck p₀ des Luftsauerstoffs gegeben ist. Der relative Anteil des Sauerstoffs in der Umgebungsluft beträgt 21 Volumenprozent.

Die Sauerstoffionenpumpe und die Nernstzelle umfassen jeweils eine sauerstoffionenleitende Festelektrolytschicht 20a bzw. 20b. Die Festelektrolyte sind nur bei einer hohen Temperatur für die Sauerstoffionen leitend. Es wird eine Temperatur von vorzugsweise 750°C mittels einer in dem Sensor 2 integrierten Heizung 27 erzeugt. Ein aus Platin bestehendes elektrisches Heizelement 27' ist in einer äusseren Basisplatte 20d eingebettet, die an eine innere Basisplatte 20c wärmeleitend angrenzt.

Auf die relativ dicken Festelektrolytschichten 20a und 20b sind Elektroden 21a, 21b bzw. 21c und 21d als dünne Schichten aufgebracht. Die Elektrode 21b der Sauerstoffionenpumpe ist mit der Elektrode 21c der Nernstzelle elektrisch leitend verbunden. Diese beiden Elektroden 21b und 21c bedecken die innere Oberfläche des Reaktionsraums 25 zu einem grossen Teil. Auf den Elektroden finden Redoxprozesse zwischen molekularem Sauerstoff, Sauerstoffionen der Festelektrolytschichten und Elektronen statt. Im Fall der Sauerstoffionenpumpe werden die Elektronen mit einem elektrischen Schaltkreis 3' an den Elektroden 21a und 21b zu- bzw. weggeführt; sie bilden dabei einen Pumpstrom lₚ. Die Stärke des Pumpstroms lₚ kann, wenn für die Sauerstoffionenpumpe ein stationärer Zustand vorliegt, als Mass für die zu messende die Konzentration des Restsauerstoffs im Abgas genutzt werden.

Der durch den Diffusionsspalt 22 fliessende Sauerstoffstrom l_{O2} wird aufgrund des Unterschieds der Partialdrücke pₘ und pᵢ angetrieben. In einem stationären Zustand ist l_{O2} proportional zum Pumpstrom lₚ. Mit dem Pumpstrom lₚ wird der Sauerstoffpartialdruck pᵢ in der Reaktionskammer unter Verwendung der Nernstzelle auf einen Sollwert eingestellt. Dabei wird die mit der Nernstzelle bestimmte Spannung, die dem Istwert von pᵢ entspricht, in dem elektronischen Teil 3 mit einer Referenzspannung verglichen, die dem Sollwert von pᵢ entspricht. Die Referenzspannung wird in einer Komponente 31 erzeugt, die auf einer Verbindung 34 zwischen einer Erdung 32 und dem Eingang eines Operationsverstärkers 30 angeordnet ist. Am Ausgang des Verstärkers 30 fliesst der Pumpstrom lₚ durch eine Leitung 23 zur Elektrode 21 a der Sauerstoffionenpumpe. Die Leitung 23 enthält einen ohmschen Widerstand 33, an dem der Pumpstrom lₚ als Spannung Uₚ messbar ist. Zum Angleichen des Istwerts an den Sollwert von pᵢ wird die Stärke des Pumpstroms lₚ geregelt.

Die bekannte Lambdasonde 1 wird üblicherweise mit einer festen Referenzspannung (z.B. 450 mV) der Komponente 31 betrieben, so dass sich in der Reaktionskammer 25 ein konstanter Sauerstoffpartialdruck pᵢ einstellt. Bei dem erfindungsgemässen Verfahren wird die Referenzspannung in einem grossen Bereich dynamisch angesteuert, indem jeweils nach kurzen Phasen (Zeitintervallen) von einer Referenzspannung zu einer nächsten gewechselt wird. So stellen sich für den Sauerstoffpartialdruck pᵢ in der Reaktionskammer 25 laufend neue Werte ein. Während einer normalen Betriebsphase, nachfolgend als Phase N bezeichnet, wird der Partialdruck pₘ des Restsauerstoffs gemessen. Zu Testzwecken wird die Lambdasonde 1 zeitweise in einer Phase H und einer Phase L betrieben. In diesen Phasen H und L nimmt pᵢ in der Reaktionskammer 25 einen weitgehend minimalen Wert (p_{H} ≈ pₘ) bzw. einen weitgehend maximalen Wert (p_{L} ≈ p₀) an.

Entsprechend ergibt sich für den Pumpstrom Iₚ ein dynamisches Signal. Wichtig beim erfindungsgemässen Verfahren ist, dass die durch die Komponente 31 gegebene Referenzspannung bis an die elektrochemisch möglichen Grenzen variiert wird. In den entsprechenden Grenzbereichen ergibt sich für die Nernstzelle eine weitgehend maximale Spannung von ungefähr 1 V (= Leerlaufspannung der Nernstzelle) bzw. eine weitgehend minimale Spannung von ungefähr 0 V. In Entsprechung mit dem Wert der jeweiligen Referenzspannung werden die Phasen mit Phase H, Phase N bzw. Phase L (ausgehend von "High", "Normal" und "Low") bezeichnet. Typischerweise betragen die Referenzspannungen 900 mV (für H), 450 mV (für N) bzw. 20 mV (für L).

Bezüglich den Grenzspannungen der Nernstzelle nimmt der Sauerstoffpartialdruck pᵢ in der Reaktionskammer 25 Werte an, die sich um mehrere Zehnerpotenzen unterscheiden. Dank den grossen Unterschieden ergibt sich für den Pumpstrom lₚ eine Verstärkung, die verglichen mit der üblichen Verstärkung von Pumpströmen sehr viel grösser ist. Aufgrund dieser Verstärkung sind Defekte, die einen Einfluss auf den Transport des molekularen Sauerstoffs in die Reaktionskammer 25 haben, sehr gut erkennbar.

Wenn man die Verhältnisse zwischen den Pumpströmen Iₚ bei verschiedenen Referenzspannungen einer neuen, intakten Sonde 1 kennt und diese Werte in einer Tabelle elektronisch hinterlegt, dann kann man durch Vergleich mit diesen Werten in einer elektronischen Logikschaltung defekte Sonden einfach erkennen. Insbesondere kann man frühzeitig - vor dem eigentlichen Messignalausfall der normalen Messung (Phase N, 450 mV Referenzspannung) - die Ausbildung eines Defekts erkennen.

Temperaturschwankungen haben einen Einfluss auf die Durchlässigkeit des Diffusionsspalts 22 und auf die lonenbeweglichkeit der Sauerstoffionenpumpe und damit auf das Sondensignal. Aus diesem Grund wird die Leistung der elektrischen Heizung 27, mit welcher der Sensor 2 auf der vorgegebenen Temperatur gehalten wird, geregelt. Hierfür wird nicht wie üblich der Innenwiderstand der Nernstzelle benutzt, da dieser einer starken Alterung unterworfen ist. Stattdessen wird ein Heizstrom phasenweise kurz unterbrochen und während dieser Unterbrechung der Widerstand des Heizelements 27' gemessen. Dieser Messwert ist ein Mass für die Temperatur des Sensors 2. Die Temperaturregelung lässt sich im Neuzustand bezüglich dem Innenwiderstand der Nernstzelle kalibrieren; denn der Wert dieses Innenwiderstands ist für den Neuzustand bekannt. Für die Kalibration wird also einmalig auf den Innenwiderstand der Nernstzelle geregelt. Sobald dieser mit einem Sollwert übereinstimmt, wird der aktuelle Wert des Widerstands des Heizelements aufgenommen. Dieser Wert kann nachfolgend während der gesamten Lebensdauer des Sensors 2 als Sollwert für die Heizleistungsregelung herangezogen werden.

Bei der Registrierung einer Änderung des Heizwiderstands wird mittels eines Regelkreises eine entsprechende Korrektur bei der Stärke des Heizstroms durchgeführt, um eine vorgegebene Betriebstemperatur (750 °C) des Sensors aufrecht zu erhalten.

Während der Phase N wird der Restsauerstoff im Abgas überwacht. Zeitweise, insbesondere intermittierend wird die Lambdasonde in der Phase H und der Phase L betrieben, wobei in diesen Betriebsphasen der Sauerstoffpartialdruck in der Reaktionskammer 25 weitgehend extremale Werte annimmt. Mittels Wechseln zwischen den genannten Betriebsphasen, durch Registrieren des Pumpstroms Iₚ und durch Vergleichen der registrierten Pumpströme Iₚ mit Erfahrungswerten sind Rückschlüsse auf die Funktionstauglichkeit der Sonde ableitbar. So können gegebenenfalls bei einer mangelhaften oder fehlenden Funktionstauglichkeit Massnahmen zur Behebung des Mangels oder zu einem Auswechseln des Sensors 2 eingeleitet werden.

Fig. 2 zeigt das dynamische Signal eines Pumpstroms Iₚ, wenn ein mageres Abgas (λ >> 1) an der Messstelle 24 eine Sauerstoffquelle bildet, die einen hohen Sauerstoffpartialdruck pₘ von rund 10⁴ Pa aufweist. Die bezüglich pᵢ sollwertbestimmende Referenzspannung der Komponente 31 wird mit fortschreitender Zeit t schrittweise von tief zu mittel (normal), von mittel zu hoch sowie von hoch zu tief und periodisch auf diese Weise fortfahrend variiert, so dass sich eine periodische Abfolge der Phasen L, N und H einstellt. Für die Phase L ist pᵢ rund 10² Pa (= p_{L}), für N rund 10⁻⁷ Pa (= p_{N}) und für H rund 10⁻¹⁵ Pa (= p_{H}). Die Referenzspannung der Komponente 31 wird bei jedem Schritt während einem Zeitintervall unverändert gelassen, mindestens bis sich ein eingeschwungener Zustand eingestellt hat. Das Einschwingen benötigt beispielsweise 3 Sekunden. Die Betriebsphasen N, L und/oder H können verschieden lang dauern.

Für den Pumpstrom Iₚ, der proportional zur Differenz zwischen pₘ und pᵢ ist, ergeben sich für alle drei Betriebsphasen L, N und H relativ grosse Werte. Nur beim Übergang von der Phase H zur Phase L bricht der Pumpstrom lₚ kurzfristig ein und zeigt sogar einen Wechsel der Fliessrichtung. Bei diesem Übergang muss der Sauerstoffpartialdruck pᵢ in der Reaktionskammer stark erhöht werden, von praktisch Null auf rund 10² Pa. Diese Erhöhung erfolgt hauptsächlich durch einen Zustrom von molekularem Sauerstoff aus dem Abgas der Messstelle 24. Die Phasen N und H lassen sich anhand des Graphs im Diagramm der Fig. 2 nicht unterscheiden.

Fig. 3 zeigt das dynamische Signal eines Pumpstroms lₚ, wenn ein fettes Abgas mit λ = 1.01 eine Sauerstoffquelle bildet, die einen niedrigen Sauerstoffpartialdruck pₘ von rund 10 Pa aufweist. In der Phase L bildet die Messstelle 24 sogar eine negative Sauerstoffquelle, also eine Sauerstoffsenke. Fig. 4 zeigt das dynamische Signal eines Pumpstroms lₚ, wenn ein fettes Abgas mit λ = 0.95 eine Sauerstoffsenke mit einem sehr kleinen Sauerstoffpartialdruck pₘ von rund 10⁻¹⁵ Pa bildet. In den stationären Zuständen fliessen die Ströme in umgekehrter Richtung als beim mageren Abgas (Fig. 2). Die Phasen N und L lassen sich anhand des Graphs nur am Profil unmittelbar nach den Übergängen von L zu N und von H zu L unterscheiden.

Das erfindungsgemässe Verfahren lässt sich in einer Vorrichtung anwenden, in der Abgase bei einer Verbrennung oder einer elektroschemischen Umsetzung oder einer elektroschemischen Umsetzung überwacht werden müssen. Die Vorrichtung kann ein Fahrzeug oder ein Heizgerät sein. Besonders geeignet ist das erfindungsgemässe Verfahren bei einer Brennstoffzellenanlage, mit der sowohl thermische Energie als auch elektrische Energie simultan aus einem Brennstoff erzeugt werden.

## Patentansprüche

1. Messeinrichtung zum Überwachen von Restsauerstoff in einem Abgas unter Verwendung einer Lambdasonde (1), bei der eine Messstelle für Sauerstoff an einem Sensor (2) über einen Diffusionsspalt (22) mit einer Reaktionskammer (25) verbunden ist, die im Betrieb der Sonde mittels einem steuerbar einstellbaren Sauerstoffpartialdruck pᵢ einen Sauerstoffstrom I_{O2} längs des Diffusionsspalts antreibt, wobei mittels einer elektrochemischen, durch einen elektrischen Pumpstrom Iₚ angetriebenen Sauerstoffionenpumpe ein als Sollwert vorgegebener Sauerstoffpartialdruck pᵢ in der Reaktionskammer einstellbar ist und so der Pumpstrom, dessen Stärke proportional zur Stärke des längs des Diffusionsspalts angetriebenen Sauerstoffstroms ist, als Messgrösse für den Partialdruck pₘ des Restsauerstoffs im Abgas verwendbar ist,
**dadurch gekennzeichnet, dass** während einer normalen Betriebsphase (N) der Restsauerstoff überwachbar ist, zu Testzwecken die Lambdasonde intermittierend in zwei Phasen (H,L) betreibbar ist, in welchen Betriebsphasen der Sauerstoffpartialdruck pᵢ in der Reaktionskammer (25) einen minimalen Wert und einen maximalen Wert annimmt, und dass mittels Wechseln zwischen den genannten Betriebsphasen, durch Registrieren des Pumpstroms lₚ und durch Vergleichen der registrierten Pumpströme lₚ mit Erfahrungswerten Rückschlüsse auf die Funktionstauglichkeit der Sonde (1) ableitbar sind, so dass gegebenenfalls bei einer mangelhaften oder fehlenden Funktionstauglichkeit Massnahmen zur Behebung des Mangels oder zu einem Auswechseln des Sensors (2) einleitbar sind.

2. Messeinrichtung nach Anspruch 1, **dadurch gekennzeichnet, dass** der Sauerstoffpartialdruck pᵢ in der Reaktionskammer (25) als Istwert elektrochemisch mittels einer Nernstzelle bestimmbar ist, dass durch Vergleich mit einer sollwertbestimmenden Referenzspannung und einer Regelung des Pumpstroms lₚ der Sollwert einstellbar ist und dass zum Einstellen der Phasen (H, N und L) jeweils eine hohe, eine mittlere bzw. eine tiefe Referenzspannung (31) vorgebbar sind.

3. Verfahren zum Betreiben einer Messeinrichtung gemäss Anspruch 2, **dadurch gekennzeichnet, dass** die Messeinrichtung ausser in der normalen Betriebs-Phase(N) intermittierend in der Phase (L) und alternierend in der Phase betrieben wird, indem die sollwertbestimmende Referenzspannung schrittweise zwischen mittel, hoch und tief verändert wird.

4. Verfahren nach Anspruch 3, **dadurch gekennzeichnet, dass** die sollwertbestimmende Referenzspannung schrittweise von tief zu mittel zu hoch und periodisch auf diese Weise fortfahrend variiert wird.

5. Verfahren nach Anspruch 3 oder 4, **dadurch gekennzeichnet, dass** die Referenzspannung bei jedem Schritt während einem Zeitintervall unverändert gelassen wird, mindestens bis sich ein eingeschwungener Zustand eingestellt hat, wobei die Betriebsphasen (N, L und/oder H) verschieden lang dauern können.

6. Verfahren nach einem der Ansprüche 3 bis 5, **dadurch gekennzeichnet, dass** eine ohmsche Widerstandsheizung (27) für Festelektrolyte (20a, 20b), die im Sensor (2) integriert ist, periodisch überprüft wird, indem während der Überprüfung der Heizwiderstand bei ausgeschaltetem Heizstrom bestimmt wird.

7. Verfahren nach Anspruch 6, **dadurch gekennzeichnet, dass** bei der Registrierung einer Änderung des Heizwiderstands mittels eines Regelkreises eine entsprechende Korrektur bei der Stärke des Heizstroms durchgeführt wird, um eine vorgegebene Betriebstemperatur des Sensors (2) aufrecht zu erhalten.

8. Anwendung des Verfahrens gemäss einem der Ansprüche 3 bis 7 in einer Vorrichtung, in der Abgase einer Verbrennung oder einer elektroschemischen Umsetzung überwacht werden, wobei die Vorrichtung ein Fahrzeug, ein Heizgerät ist oder eine Brennstoffzellenanlage, mit der sowohl thermische Energie als auch elektrische Energie simultan aus einem Brennstoff erzeugt werden.

## Claims

1. A measuring apparatus for monitoring residual oxygen in an exhaust gas using a lambda probe (1) in which a measuring point for oxygen at a sensor (2) is connected via a diffusion gap (22) with a reaction chamber (25) which, during operation of the probe, drives a stream of oxygen Iₒ₂ along the diffusion gap by means of a controllably adjustable oxygen partial pressure pᵢ, wherein a predetermined oxygen partial pressure pᵢ can be set in the reaction chamber as a desired value by means of an electrochemical oxygen ion pump driven by an electrical pump current Iₚ and thus the pump current, the strength of which is proportional to the strength of the oxygen stream driven along the diffusion gap, can be used as a measurement parameter for the partial pressure pₘ of the residual oxygen in the exhaust gas, **characterised in that** the residual oxygen can be monitored during a normal operating phase (N), **in that** the lambda probe can be operated intermittently for test purposes in two phases (H, L), in which operating phases the oxygen partial pressure pᵢ in the reaction chamber (25) adopts a minimum value or a maximum value and **in that** by mean of changing between the named operating phases, by registering the pump current Iₚ and by comparing the pump currents Iₚ with empirical values, conclusions with regard to the ability of the probe (1) to function can be derived so that if necessary, in the case of a lacking or faulty ability to function, measures can be introduced to remedy the deficiencies or to exchange the sensor (2).

2. A measuring apparatus in accordance with claim 1 **characterised in that** the oxygen partial pressure pᵢ in the reaction chamber (25) can be determined as an actual value electrochemically by means of a Nernst cell, **in that** the desired value can be set by comparison with a desired value determining reference voltage and a regulation of the pump current lₚ and **in that** a high reference voltage, a medium reference voltage and a low reference voltage (31) can be respectively preset for the selection of the phases (H, N and L).

3. A method for operating a measuring apparatus in accordance with claim 2 **characterised in that** except in the normal operating phase (N), the measuring apparatus is intermittently operated in the phase (L) and/or alternatingly in the phase (H) by changing the reference voltage determining the desired value in steps between medium, high and/or low.

4. A method in accordance with claim 3 **characterised in that** the reference voltage determining the desired value is continuously varied stepwise from low to medium to high and periodically in this manner.

5. A method in accordance with claim 3 or claim 4 **characterised in that** the reference voltage is left unchanged at every step during a time interval, at least until a settled state has set in, wherein the operating phases (N, L and/or H) can last for differing lengths of time.

6. A method in accordance with one of the claims 3 to 5, **characterised in that** an ohmic resistance heater (27) for a solid electrolyte (20a, 20b) which is integrated in the sensor (2) is checked periodically **in that** during the check during the checking of the heater resistance is determined with the heater current switched off.

7. A method in accordance with claim 6 **characterised in that** when registering a change of the heater resistance a corresponding correction of the strength of the heater current is carried out by means of a regulating current in order to maintain a pre-determined operating temperature of the sensor (2).

8. The use of the method in accordance with one of the claims 3 to 7 in an apparatus in which exhaust gases of a combustion process or of an electrochemical reaction are monitored with the apparatus being a vehicle, a heating device or a fuel cell system with which both thermal energy and also electrical energy can be produced simultaneously from a fuel.

## Revendications

1. Dispositif de mesure pour la surveillance de l'oxygène résiduel dans un gaz d'échappement moyennant l'utilisation d'une sonde lambda (1), dans laquelle un point de mesure pour l'oxygène sur un capteur (2) est relié par l'intermédiaire d'une fente de diffusion (22) à une chambre de réaction (25), qui entraîne en service de la sonde, au moyen d'une pression partielle d'oxygène pᵢ réglable par commande, un courant d'oxygène I_{O2} le long de la fente de diffusion, sachant qu'au moyen d'une pompe électrochimique à ions d'oxygène actionnée par un courant électrique de pompage Iₚ, une pression partielle d'oxygène pᵢ prédéfinie comme valeur de consigne peut être réglée dans la chambre de réaction et qu'ainsi le courant de pompage, dont l'intensité est proportionnelle à l'intensité du courant d'oxygène entraîné le long de la fente de diffusion, est utilisable comme grandeur de mesure pour la pression partielle pₘ de l'oxygène résiduel dans le gaz d'échappement,
**caractérisé en ce que**, pendant une phase de fonctionnement normale (N), l'oxygène résiduel peut être surveillé, **en ce qu'**à des fins de test, la sonde lambda peut être exploitée par intermittence dans deux phases (H, L), dans lesquelles phases de fonctionnement la pression partielle d'oxygène pᵢ prend dans la chambre de réaction (25) une valeur minimale et une valeur maximale, et **en ce qu'**au moyen de l'alternance entre les phases de fonctionnement citées, par détection du courant de pompage Iₚ et par comparaison des courants de pompage Iₚ détectés à des valeurs d'expérience, des conclusions peuvent être tirées sur l'aptitude au fonctionnement de la sonde (1), de telle sorte que, le cas échéant, en cas d'aptitude au fonctionnement insuffisante ou absente, des mesures pour remédier au défaut ou pour remplacer le capteur (2) peuvent être déclenchées.

2. Dispositif de mesure selon la revendication 1, **caractérisé en ce que** la pression partielle d'oxygène pᵢ dans la chambre de réaction (25) peut être déterminée électrochimiquement comme valeur réelle au moyen d'une cellule de Nernst, **en ce que**, par comparaison avec une tension de référence qui détermine une valeur de consigne et par une régulation du courant de pompage Iₚ, la valeur de consigne est réglable et **en ce que** pour le réglage des phases (H, N et L), on peut spécifier une tension de référence (31) haute, moyenne, respectivement basse.

3. Procédé d'exploitation d'un dispositif de mesure selon la revendication 2, **caractérisé en ce que** le dispositif de mesure, hormis dans la phase de fonctionnement normal (N), est exploité par intermittence dans la phase (L) et en alternance dans la phase (L), la tension de référence qui détermine la valeur de consigne étant modifiée pas à pas entre moyenne, haute et basse.

4. Procédé selon la revendication 3, **caractérisé en ce que** la tension de référence qui détermine la valeur de consigne est variée pas à pas de basse à moyenne, à haute et ainsi périodiquement de suite.

5. Procédé selon la revendication 3 ou 4, **caractérisé en ce que** la tension de référence est laissée inchangée à chaque étape pendant un intervalle de temps, au moins jusqu'à ce qu'il se règle un état post-transitoire, sachant que les phases de fonctionnement (N, L et/ou H) peuvent être de durées différentes.

6. Procédé selon l'une des revendications 3 à 5, **caractérisé en ce qu'**un chauffage à résistance ohmique (27) pour l'électrolyte solide (20a, 20b), qui est intégré dans le capteur (2), est vérifié périodiquement, **en ce que**, pendant le contrôle, la résistance du chauffage est déterminée avec le courant de chauffage coupé.

7. Procédé selon la revendication 6, **caractérisé en ce que**, lors de la détection d'une variation de la résistance du chauffage, une correction appropriée auprès de l'intensité du courant de chauffage est effectuée au moyen d'une boucle de régulation pour conserver une température de service spécifiée du capteur (2).

8. Application du procédé selon l'une des revendications 3 à 7 dans un dispositif dans lequel des gaz d'échappement d'une combustion ou d'une réaction électrochimique sont surveillés, sachant que le dispositif est un véhicule, un appareil de chauffage ou une installation à pile à combustible avec laquelle aussi bien de l'énergie thermique que de l'énergie électrique sont produites en même temps à partir d'un combustible.
